(19) Europäisches Patentamt
European Patent Office
Office européen des brevets

(11) **EP 2 912 384 B1**

(12) **EUROPÄISCHE PATENTSCHRIFT**

(45) Veröffentlichungstag und Bekanntmachung des Hinweises auf die Patenterteilung:
**28.08.2019** **Patentblatt 2019/35**

(21) Anmeldenummer: **13771215.4**

(22) Anmeldetag: **31.07.2013**

(51) Int Cl.:
**G05D 23/19** (2006.01)   **F24D 19/10** (2006.01)

(86) Internationale Anmeldenummer:
**PCT/IB2013/056282**

(87) Internationale Veröffentlichungsnummer:
**WO 2014/045134 (27.03.2014 Gazette 2014/13)**

(54) **VERFAHREN ZUM BETRIEB EINER HEIZUNGSANLAGE**

METHOD OF OPERATING A HEATING INSTALLATION

PROCÉDÉ DE FONCTIONNEMENT D'UNE INSTALLATION DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2012 DE 102012018778**

(43) Veröffentlichungstag der Anmeldung:
**02.09.2015 Patentblatt 2015/36**

(73) Patentinhaber: **Le, Huu-Thoi**
**13556 Berlin (DE)**

(72) Erfinder: **Le, Huu-Thoi**
**13556 Berlin (DE)**

(74) Vertreter: **Stütz, Jan**
**Unter den Linden 10**
**10117 Berlin (DE)**

(56) Entgegenhaltungen:
**WO-A1-2012/020205**     **DE-A1- 4 019 503**
**DE-A1-102009 004 319**

**Beschreibung**

In derzeitigen Heizungssystemen arbeiten die Komponenten wie Kessel, Pumpe, Thermostatventile weitgehend unabhängig voneinander. Daraus ergeben sich folgende Probleme: Fallen im Raum Wärmegewinne (Sonnenstrahlung, Beleuchtung, Wärmeabgaben von elektronischen Geräten, Menschen etc.) an, wird zur Beheizung des Raumes weniger Wärme benötigt. Demzufolge drosselt das Thermostatventil den Volumenstrom durch den Heizkörper. Der zentralen Kessel- und der Pumpenregelung stehen die lokalen Informationen (Wärmegewinne, Raumtemperatur etc.) jedoch nicht zur Verfügung. Deshalb arbeiten der Kessel und die Pumpe weiter so, als ob keine Wärmegewinne vorhanden wären. Es ergeben sich somit eine höhere Vorlauftemperatur und ein höherer Drucksprung als erforderlich. Eine zu hohe Vorlauftemperatur verursacht größere Wärmeverluste des Kessels, der Rohrleitungen und verringert den Nutzungsgrad des Heizungssystems. Ein zu hoher Förderdruck ist zum einen Verschwendung des elektrischen Energieverbrauches für den Pumpenbetrieb und zum anderen erzeugt er unangenehme Geräusche an Thermostatventilen, also Komforteinbußen für den Nutzer.

Der erforderliche Soll-Volumenstrom und die erforderliche Kessel-Solltemperatur bei der Auslegung (Heizkurve) werden aus der Heizlast des Raumes sowie der dazugehörigen installierten Heizkörperleistung (Heizkörpergröße) bestimmt. Unter der Heizkurve versteht man die notwendige Vorlauftemperatur in Abhängigkeit der Außentemperatur, um unterschiedliche Räume des Gebäudes ohne äußere Wärmegewinne wie Solarstrahlung und ohne innere Wärmegewinne (Wärmeabgabe von Beleuchtung, elektrische Equipments, Personen etc.) ausreichend zu versorgen. In der Praxis wird die Heizkurve vorsichtshalber deutlich zu hoch eingestellt, weil die relevanten erforderlichen Daten (exakte Heizlastberechnung, korrekte Pumpeneinstellung etc.) fehlen.

In der Realität haben innere und äußere Wärmegewinne einen so hohen Anteil, dass die verfügbare Vorlauftemperatur immer weit höher als erforderlich ist und eine entsprechende Reduzierung des Nutzungsgrads (Erhöhung der Verluste von Kessel, Rohrleitungen, Verringerung der Brennwertnutzung bei Brennwertkesseln) verursacht.

Da die hydraulischen Verhältnisse für einzelne Heizkörper unterschiedlich sind, muss ein sogenannter hydraulischer Abgleich durchgeführt werden, um alle Räume mit Wärme ausreichend zu versorgen. Sonst gibt es ein Problem mit Über- und Unterversorgungen einzelner Bereiche (ein Raum in der Nähe zur Pumpe ist zu warm, ein anderer entfernter Raum bleibt kalt).

Der hydraulische Abgleich nach den bekannten Regeln der Technik, nachfolgend als statischer hydraulischer Abgleich bezeichnet, ist ein Abgleich bei Auslegungsbedingungen bzw. im Nennbetrieb. Bei diesem statischen hydraulischen Abgleich werden an den Thermostatventilen der pumpennäheren Heizkörper Voreinstellungen (zusätzliche hydraulische Widerstände) vorgenommen.

Bedingungen, unter denen der statische hydraulische Abgleich erneut durchgeführt werden muss, sind:

- ✔ Einbau zusätzlicher Heizkörper
- ✔ Einbau neuer Dachfenster
- ✔ nachträgliche Wärmedämmung an Fassaden
- ✔ Sollwertänderungen durch den Nutzer
- ✔ etc.

In der Praxis wird ein neuer Abgleich aber kaum realisiert.

Durch die Voreinstellungen beim statischen hydraulischen Abgleich werden die Strömungsquerschnitte der Thermostatventile verkleinert. Damit entsteht die Gefahr der Verstopfung an den Thermostatventilen, falls sich Späne von Rohrleitungen, Armaturen, Heizkörpern, Kessel etc. lösen bzw. bei Reparaturarbeiten an der Heizungsanlage entstehen und diese Späne die verbleibenden Strömungsquerschnitten des Thermostatventils zusetzen. Der Nutzerkomfort wird somit nicht mehr gewährleistet.

Der statische hydraulische Abgleich setzt folgende Daten voraus:

- ➢ die Heizlast von einzelnen Räumen,
- ➢ die Heizkörperleistung,
- ➢ die charakteristische Kennlinie des Thermostatventils,
- ➢ die Druckverluste von Rohrleitungen, Armaturen,
- ➢ die Struktur des Rohrnetzes (Netztopologie),
- ➢ Rohrlänge und Verlegungsart bei Fußbodenheizung.

Diese Daten sind i.d.R. bei den Altbauten nicht verfügbar. Deshalb wird der statische hydraulische Abgleich in der gegenwärtigen Praxis anhand der Abschätzung von fehlenden Daten fehlerhaft durchgeführt.

Weiterhin gibt es derzeit kein praktikables Verfahren für den statischen hydraulischen Abgleich an Systemen mit Fußboden- bzw. Flächenheizung.

Nach dem Stand der Technik ist bekannt, dass statt des Thermostatkopfes ein gesteuerter Motorantrieb zum Einsatz kommt. In dem Antrieb sind ein Temperatursensor zur Erfassung der Raumtemperatur, die Möglichkeit für die Eingabe der gewünschten Raumtemperatur (Sollwert) und ein PI Regler integriert. Der Temperatursensor erfasst die Raumtemperatur und stellt diese dem integrierten Regler zur Verfügung. Der PI Regler berechnet anhand der Abweichung zwischen dem Temperatur-Sollwert und - Istwert den aktuellen Ventilhub, mit dem der Motor die Spindel in die entsprechende Position versetzt.

Es gehört auch zum Stand der Technik, dass die Antriebe und eine Zentralen Regeleinheit (ZRE) kabelgebunden oder kabellos miteinander kommunizieren. Damit besteht die Möglichkeit, die Eingabe der Sollwerte sowohl an den Antrieben als auch an der Zentralen Einheit vorzunehmen.

Bei dem Verfahren nach der DE 10 2009 004 319 A1 werden die Merkmale des dynamischen und statischen hydraulischen Abgleichs dargestellt. Der dynamische hydraulische Abgleich ermöglicht eine kontinuierliche Anpassung der wechselnden hydraulischen Bedingungen im Heizsystem basierend auf der Wassertemperatur beim Austritt aus dem Heizkörper, die sogenannte Rücklauftemperatur. Dafür sind Sensoren zur Erfassung der Raumtemperatur und der Rücklauftemperatur erforderlich. Das Verfahren setzt weiterhin voraus, dass zum einen die zentrale Pumpe immer den richtigen Drucksprung liefert und zum anderen der Kessel die passende Vorlauftemperatur regelt.

Das Verfahren nach der DE 10 2010 056 373 A1 ermöglicht einen intergierten dynamischen Thermisch-Hydraulischen Abgleich. Dafür sind eine Dezentrale Regeleinheit, Zentrale Regeleinheit und Erfassung der umfangreichen Parameter (zentrale Parameter: Auslegungstemperatur, Heizkurve, Mindestmassestrom, Heizkurveneinstellung, Pumpeneinstellung; dezentrale Parameter: Innentemperatur-Soll, Normleistung, Exponent des Heizkreises, Mindestspreizung, Innentemperatur-Mindestabstand, Ventileinstellung) sowie zahlreiche Messwerte (zentral: Außentemperatur, Vorlauf- und Rücklauftemperatur am Wärmeerzeuger; dezentral: Innentemperatur, Rücklauf- und optional Vorlauftemperatur am Heizkreis) erforderlich. Beim Verfahren AKZ 10 2012 002 941.1 ist die Vorgehensweise zum dynamischen hydraulischen Abgleich, zur Pumpenadaption sowie zur Anpassung der Heizkurve beschrieben. Es setzt jedoch voraus, dass die Rohrnetzstruktur der Heizungsanlage sowie die dazugehörigen hydraulischen Widerstände bekannt sind.

Das Dokument DE 40 19 503 A1 offenbart den Oberbegriff der Ansprüche 1 und 6.

Der Erfindung liegt die Aufgabe zugrunde, ein Verfahren für den Anlagenbetrieb mit unbekannten Rohrnetzstruktur der Heizungsanlage zu ermöglichen, in dem der hydraulische Abgleich und die Pumpenleistung sowie die Regelung der Vorlauftemperatur vom Kessel fortlaufend in Abhängigkeit von den jeweiligen Randbedingungen automatisch angepasst werden.

Diese Aufgabe wird erfindungsgemäß durch eine Heizungsanlage gemäß Anspruch 1 gelöst. Vorzugsweise ist die Regeleinheit dazu ausgebildet ist, anhand der Heizkurve sowie der von den Stellmotoren erfassten und übertragenen Ventilhübe und der von den Temperatursensoren erfassten und übertragenen Temperaturen und/oder Temperaturdifferenzen die Pumpenleistung unter Einhaltung der Solltemperaturen solange anzupassen, bis der Hub des hydraulisch ungünstigsten Ventils in der Heizungsanlage die festgelegte maximale Stellung anzunehmen. Dabei handelt es sich vorzugsweise nicht um eine Stellung, welche durch einen statischen hydraulischen Abgleich berechnet wurde, sondern die maximale Stellung ist bevorzugt eine nahezu vollständige oder vollständige Öffnung des Ventils.

Gemäß einer weiteren Ausführungsform ist die Regeleinheit dazu ausgebildet ist, anhand der adaptierten Pumpenleistung, der unvoreingestellten Thermostatventile, sowie der von den Stellmotoren erfassten und übertragenen Ventilhübe und der von den Temperatursensoren erfassten und übertragenen Temperaturen und/oder Temperaturdifferenzen (Regelabweichungen) die Vorlauftemperatur solange anzupassen, bis der Hub des hydraulisch ungünstigsten Ventils in der Heizungsanlage die festgelegte maximale Stellung annimmt.

Entsprechend einer weiteren Ausführungsform der Heizungsanlage ist die Regeleinheit mit einem Datenspeicher verbunden und dazu ausgebildet, die stationären Arbeitspunkte der Ventile in dem Datenspeicher abzulegen und/oder auszulesen.

Vorzugsweise ist die Regeleinheit der Heizungsanlage auch dazu ausgebildet, die Ventilhübe während eines Aufheizmodus entsprechend eines zuvor abgespeicherten stationären Arbeitspunktes als oberer Grenzwert zu begrenzen und während eines Regelmodus die Begrenzung aufzuheben..

Neben der erfinderischen Heizungsanlage betrifft die hier beschriebene Erfindung gleichzeitig auch ein Verfahren zum Betrieb einer Heizungsanlage gemäß Anspruch 6. Solch ein Verfahren kann von einer Heizungsanlage durchgeführt werden, bei der statt konventioneller Thermostatköpfe Motorantriebe eingesetzt sind, wobei eine Zentrale Regeleinheit Motorantriebe , Kessel und Pumpe kabelgebunden oder kabellos miteinander kommunizieren, wobei die Rohrnetzstruktur der Heizungsanlage sowie die dazugehörige hydraulische Widerstände unbekannt sind, und wobei kein Sensor zur Erfassung des zentralen Volumenstromes vorgesehen ist, dadurch gelöst, dass in der Anlernphase die stationären Arbeitspunkte (stationäre Positionen der Ventilhübe) registriert und in der Zentralen Regeleinheit gespeichert werden.

In der Aufheizzeit lassen sich die aktuellen Ventilhübe von den gespeicherten stationären Arbeitspunkten im Sinne des hydraulischen Abgleichs begrenzen. Aus Zusammenhängen zwischen aktuellen Ventilhüben, Temperatur-Sollwerten und Temperatur-Istwerten erfolgen die Anpassung der Heizkurve für die Vorlauftemperaturregelung des zentralen Heizkessels und die Adaption der Pumpenleistung.

In einem bevorzugten ersten Schritt werden die stationären Arbeitspunkte registriert und in einem mit einer Regeleinheit verbundenen Datenspeicher abgespeichert.

In einem zweiten Schritt wird durch eine Analyse der Temperatur Sollwerte, -Istwerte und der aktuellen Ventilhüben die Vorlauftemperaturregelug des zentralen Heizkessels und/oder die Pumpenleistung angepasst.

Nach der Erfindung ist bevorzugt vorgesehen, dass bei der Ermittlung der Pumpenleistung sowie bei der Hubbegrenzung in der Aufheizphase für den hydraulischen Abgleich die Vorlauftemperatur nach der Heizkurve geregelt wird. Danach erfolgt die Anpassung der Heizkurve bei der konstanten Pumpenleistung, die zuvor ermittelt wurde.

Die stationären Arbeitspunkte der Ventilhübe unter Berücksichtigung der Randbedingungen (Außentemperatur, Zeitpunkt zur Erfassung der stationären Arbeitspunkte sowie Anzahl der Thermostatventile in Zwischenstellung) werden als obere Grenzwerte für die Hubbegrenzung in der nächsten Aufheizphase in der Zentralen Regeleinheit gespeichert.

In der Aufheizphase stellt die Zentrale Regeleinheit die oberen Grenzwerte an den Motorantrieben zur Verfügung. Der im Motorantrieb integrierte PI Regler ermittelt aus der Regelabweichung den aktuellen Ventilhub, der von dem oberen Grenzwert begrenzt wird. Das bedeutet eine Begrenzung der $K_V$-Werte im Sinne des hydraulischen Abgleichs. Da die Ventilhübe von allen Heizkörpern in der Heizungsanlage auf die oberen Grenzwerte gleichzeitig begrenzt sind, werden alle Heizkörper bedarfsgerecht versorgt.

Bei der Inbetriebnahme der Heizungsanlagen liegen keine stationären Arbeitspunkte vor. Die Startwerte der oberen Grenzwerte für alle Ventilhübe betragen zunächst 100 %. Das bedeutet, dass in dieser Phase die Anlagenhydraulik nicht abgeglichen ist. Der Temperatur-Sollwert des hydraulisch günstigsten Raumes und somit der dazugehörige stationäre Arbeitspunkt werden schneller und als erstes erreicht. Danach erfolgt der nächstgünstige Raum. Als letztes erreicht der stationäre Arbeitspunkt des ungünstigsten Raumes. Diese stationären Arbeitspunkte werden für die Begrenzung der Ventilhübe in der nächsten Aufheizphase (z.B. am nächsten Tag) verwendet.

Liegen am aktuellen Tag die stationären Arbeitspunkte in frühen Morgenstunden (z.B. 6 Uhr) vor, wobei zu diesem Zeitpunkt weder interne noch externe Wärmegewinne vorhanden sind, und es Abweichungen zwischen den alten und neuen stationären Arbeitspunkten gibt, werden die oberen Grenzwerte durch die neuen stationären Arbeitspunkte in der Zentralen Regeleinheit aktualisiert.

Sobald sich ein oder mehrere Ventilhübe aufgrund der Wärmegewinne bzw. des Nutzereingriffes in geschlossener oder in nahezu geschlossener Stellung befinden, können sie so betrachtet werden, als ob die Heizkörper mit geschlossenen Ventilen nicht zum Rohrnetz der Heizungsanlage gehörten. Es entsteht somit eine neue Rohrnetzstruktur bzw. neue Konstellation. Die Ermittlung der stationären Arbeitspunkte bei der neuen Konstellation fängt wie oben beschrieben wieder von vorn an.

Somit ergeben sich für ein bestimmtes Ventil unterschiedliche obere Grenzwerte in Abhängigkeit der Anlagenkonstellationen, sogenannter dynamischer hydraulischer Abgleich. Mit anderen Worten ist in der Aufheizphase ein Ventilhub größer als der obere Grenzwert nicht erlaubt, wobei der obere Grenzwert dynamisch in Abhängigkeit von der Anlagenkonstellation ermittelt wird.

Die Begrenzung der Ventilhübe erfolgt ausschließlich in der Aufheizphase. Nach dem Erreichen der stationären Arbeitspunkte gibt es keine Hubbegrenzung mehr. Jedes Ventil kann anhand der Regelabweichung zwischen dem Temperatur-Sollwert und -Istwert frei regeln, sogenannte Regelungsphase.

Die Pumpenadaption erfolgt nach dem Ende der Aufheizphase. Dabei lässt sich die Leistung der zentralen Pumpe solange justieren, bis in der Heizungsanlage immer ein hydraulisch ungünstigstes Ventil in Stellung nahezu 100 % positioniert.

Bei der ersten Inbetriebnahme wird zuerst die Pumpe mit großzügiger Leistung als Startwert gefahren (z.B. Pumpendrucksprung von 25000 Pa für ein Einfamilienhaus). Zum Beginn der Regelungsphase sind alle stationären Arbeitspunkte erreicht. Da die Pumpenleistung größer als erforderlich ist, befindet sich sogar der stationäre Arbeitspunkt des hydraulisch ungünstigsten Ventils in Zwischenstellung, z.B. 50 %. Daraufhin lässt sich die Pumpenleistung Schrittweise z.B. um 5 % solange reduzieren, bis der Hub des hydraulisch ungünstigsten Ventils die Stellung nahezu 100 % erreicht.

Umgekehrt, abgesehen von den hydraulisch ungünstigsten Ventilen, befinden sich übrige Ventilhübe in Zwischenstellung (kleiner als 100 %) und sind die dazugehörigen Temperatur-Sollwerte eingehalten. Obwohl die hydraulisch ungünstigsten Ventilhübe schon 100 % betragen, erreichen die Temperaturen der hydraulisch ungünstigsten Räume nicht die geforderten Temperatur-Sollwerte. Das ist ein Hinweis darauf, dass die Pumpenleistung geringer als notwendig ist. Demzufolge wird die Pumpenleistung Schrittweise z.B. um 5 % erhöht, bis alle Temperatur-Sollwerte eingehalten sind und gleichzeitig ein hydraulisch ungünstigstes Ventil in Stellung nahezu 100% bleibt.

Befinden sich ein oder mehrere Ventilhübe aufgrund der Wärmegewinne bzw. des Nutzereingriffes in geschlossener oder in nahezu geschlossener Stellung, entsteht eine neue Konstellation. Die Ermittlung der Pumpenleistung bei der neuen Konstellation fängt wie oben beschrieben wieder von vorn an. Somit ist die Pumpenleistung dynamisch und abhängig von der Anlagenkonstellation bzw. Anzahl der Ventile in Zwischenstellung.

Stehen in der Regelungsphase alle Ventilhübe bei Positionen viel kleiner als die dazugehörigen oberen Grenzwerte und die Temperatur-Sollwerte sind eingehalten, liegt eine ausreichende Versorgung für das gesamte Gebäude vor. Tritt dieser Fall auf, kann die Vorlauftemperatur von der aktuellen Heizkurve um z.B. 3 K für einen Zeitraum von z.B. 20 Minuten abgesenkt werden. Nach dem Ablauf dieses Zeitraumes wird eine neue Entscheidung getroffen, ob die Vorlauftemperatur von der Heizkurve weiter reduziert wird.

Überschreiten in der Regelungsphase Ventilhübe die dazugehörigen oberen Grenzwerte und ist der Temperatur-Sollwert nicht eingehalten, wird die Vorlauftemperatur wieder angehoben.

Die Heizkurve dient als Richtlinie für die Adaption der Vorlauftemperatur. Die tatsächliche Vorlauftemperatur lässt sich in Abhängigkeit von den jeweiligen Randbedingungen anpassen.

Diese Erfindung ermöglicht eine Absenkung der Vorlauftemperatur solange, bis in der Heizungsanlage ein Ventil gibt, dessen Hub die Stellung nahezu 100 % annimmt. Dabei müssen die Temperatur-Sollwerte eingehalten werden. Die Reduzierung der Vorlauftemperatur bedeutet eine Erhöhung der Brennwertnutzung und gleichzeitig Verringerung der Wärmeverluste durch Strahlung, Konvektion etc., also Steigerung des Nutzungsgrads (effizienter Kesselbetrieb).

Im Rahmen der Erfindung wird auch ein Nachrüstsatz verstanden, welcher ermöglich,t die Vorlauftemperatur VL auch indirekt in Abhängigkeit von dem Hub des hydraulisch ungünstigsten Ventils 1 vorzunehmen. Solch ein Nachrüstsatz könnte aus einer Regeleinheit, Stellmotoren, Ventilen und zugehörigen Temperatursensoren und einem Außen-Temperatursensor bestehen, wobei die Regeleinheit mit einer in der Heizungsanlage schon vorhandenen Zentralen Regeleinheit über den Anschluss für einen äußeren Temperatursensor verbindbar ist und eine gemessen äußere Temperatur solange modifiziert, bis die Zentrale Regeleinheit ZRE eine Vorlauftemperatur VL einstellt, bei der das hydraulisch ungünstigste Ventil seine maximale Stellung einnimmt.

Das Verfahren wurde beispielshaft anhand einer Zweirohr-Heizungsanlage mit eingesetzten Thermostatventilen, Motorantrieben erläutert und wird aber nicht auf diese Anlage beschränkt. Das Funktionsprinzip gilt selbstverständlich auch bei Anlagen mit Einrohrheizung, Fußbodenheizung, Flächenheizung, Flächenkühlung sowie bei den Kälte- und Kühlanlagen.

Das erfindungsgemäße Verfahren zum Betrieb einer Heizungsanlage mit Zweirohrsystem wird nachfolgend anhand eines vereinfachten Ausführungsbeispiels näher erläutert.

Es zeigen

Fig. 1 eine vereinfachte Darstellung einer konventionellen Zweirohrheizung mit 3 Heizkörpern,

Fig. 2 eine Darstellung des vereinfachten Beispiels in Fig. 1 aus strömungstechnischer Sicht,

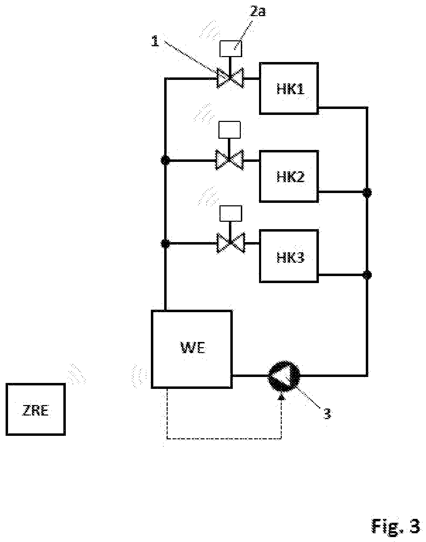

Fig. 3 ein Ausführungsbeispiel für das erfindungsgemäße Verfahren.

Das folgende Beispiel mit Zahlen von hydraulischen Widerstände, Soll-Volumenströme $K_V$-Werte etc. dient zur Verdeutlichung der Vorgehensweise des erfindungsgemäßen Verfahrens. Zur Ausführung dieses vorteilhaften Verfahrens sind die Soll-Volumenströme, $K_V$-Werte, Rohrnetzstruktur und hydraulische Widerstände nicht erforderlich.

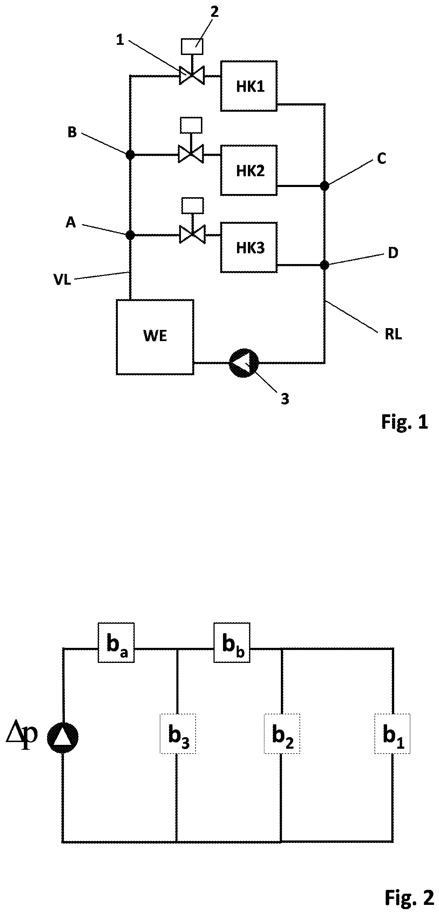

Fig. 1 zeigt ein vereinfachtes Beispiel für eine konventionelle zentrale Zweirohrheizung mit einem Wärmeerzeuger WE, einer Vorlaufleitung VL, einer Rücklaufleitung RL, einer zentralen Pumpe 3, drei Heizkörpern HK1, HK2 und HK3 und Thermostatventilunterteil 1 sowie Thermostatkopf 2.

Das Beispiel in Fig. 1 kann nun aus strömungstechnischer Sicht in Fig. 2 dargestellt werden. Dabei besteht der hydraulische Widerstand $b_a$ aus den hydraulischen Teilwiderständen aller möglichen Rohrleitungen, Bögen, sowie des Wärmeerzeugers von dem Punkt D bis A in Fig. 1. Da das Rohrnetz symmetrisch ist, können die hydraulischen Teilwiderstände von den Strecken A→B und C→D (siehe Fig. 1) zu einem hydraulischen Widerstand $b_b$ zusammengefasst werden. Der hydraulische Widerstand $b_1$ stellt sämtliche Widerstände von dem Punkt B entlang des Heizkörpers HK1 bis zu dem Punkt C in Fig. 1, einschließlich den Widerstand des Thermostatventils in offene Stellung, dar. Analog sind $b_2$ der hydraulische Widerstand von B zu C über dem Heizkörper HK2 und $b_3$ der hydraulische Widerstand von A zu D über dem Heizkörper HK3.

Es ergeben sich insgesamt 3 Maschen. Die erste Masche **M1** besteht aus den Teilstrecken mit den Widerständen $b_a$, $b_b$ und $b_1$; die zweite Masche **M2** aus $b_a$, $b_b$ und $b_2$; und die letzte Masche **M3** aus $b_a$ und $b_3$. Durch die Teilstrecke mit $b_a$ fließt der Volumenstrom $\dot{V}_a = \dot{V}_1 + \dot{V}_2 + \dot{V}_3$ und es entsteht ein Druckverlust, der näherungsweise nach der Formel

$$\Delta p_a = b_a \cdot \dot{V}_a^2$$ berechnet wird.

Die Abhängigkeit der Dichte des Mediums in Heizungsanlagen (meistens Wasser) von der Temperatur wird hier aufgrund der Vereinfachung nicht betrachtet. Schließlich lässt sich der gesamte Druckverlust von jeder Masche bestimmen, in dem die Druckverluste von den einzelnen Teilstrecken aufsummiert werden.

$$\sum \Delta p_{M1} = \Delta p_a + \Delta p_b + \Delta p_1$$

$$\sum \Delta p_{M2} = \Delta p_a + \Delta p_b + \Delta p_2$$

$$\sum \Delta p_{M3} = \Delta p_a + \Delta p_3$$

Die Daten für einzelne Strecken sowie Maschen werden in der Matrix M abgelegt.

$$M = \begin{bmatrix} b_a & b_b & b_1 & \dot{V}_a & \dot{V}_b & \dot{V}_1 & \Delta p_a & \Delta p_b & \Delta p_1 & \Sigma\Delta p_{M1} & \dots \\ b_a & b_b & b_2 & \dot{V}_a & \dot{V}_b & \dot{V}_2 & \Delta p_a & \Delta p_b & \Delta p_2 & \Sigma\Delta p_{M2} & \dots \\ b_a & b_3 & 0 & \dot{V}_a & \dot{V}_3 & 0 & \Delta p_a & \Delta p_3 & 0 & \Sigma\Delta p_{M3} & \dots \end{bmatrix}$$

Im Zahlenbeispiel haben $b_a$ und $b_b$ den gleichen hydraulischen Widerstand von 0,2 Pa/(l/h)$^2$ sowie $b_1$, $b_2$ und $b_3$ den gleichen Wert von 0,6 Pa/(l/h)$^2$. Durch die Heizkörper HK1, HK2 und HK3 sollen folgende Soll-Volumenströme

$$\dot{V}_1 = 50\frac{l}{h} \quad ; \quad \dot{V}_2 = 100\frac{l}{h} \quad und \quad \dot{V}_3 = 30\frac{l}{h}$$

fließen. Daraus lässt sich der Druckverlust von jeder einzelnen Teilstrecke bestimmen, wobei $\dot{V}_a = \dot{V}_1 + \dot{V}_2 + \dot{V}_3$ und $\dot{V}_b = \dot{V}_1 + \dot{V}_2$ gelten. Es entsteht somit die Matrix $M_0$:

$$M_0 = \begin{bmatrix} 0,2 & 0,2 & 0,6 & 180 & 150 & 50 & 6480 & 4500 & 1500 & 12480 \\ 0,2 & 0,2 & 0,6 & 180 & 150 & 100 & 6480 & 4500 & 6000 & 16980 \\ 0,2 & 0,6 & 0 & 180 & 30 & 0 & 6480 & 540 & 0 & 7020 \end{bmatrix}$$

Die Masche **M1** hat den gesamten Druckabfall von 12480 Pa; die Masche **M2** mit 16980 Pa und die Masche **M3** mit 7020 Pa. Das bedeutet, dass die Masche **M2** den größten Druckabfall hat.

Als Thermostatventil kommt das Danfoss Ventilgehäuse Typ RA-N 10 zum Einsatz.

| Danfoss Ventilgehäuse Typ RA-N 10 | | | |
|---|---|---|---|
| Voreinstellung | **Hub** [%] | **K$_V$** [m$^3$/h] | **K$_{VS}$** [m$^3$/h] |
| N | 100 | 0,65 | 0,65 |
| N | 50 | 0,56 | 0,65 |
| N | 25 | 0,34 | 0,65 |
| N | 0 | 0 | 0,65 |

Zur Ausführung des vorteilhaften erfindungsgemäßen Verfahrens werden zunächst konventionelle Thermostat-Köpfe 2 durch Motorantriebe 2a ersetzt. Anschließend erfolgt die Einrichtung der bi-direktionale Kommunikation zwischen Motorantrieben 2a, Wärmeerzeuger WE und Zentraler Regeleinheit ZRE.

Bei der ersten Inbetriebnahme betragen die Startwerte der oberen Grenzwerte von 100 % für alle drei Ventile. Die Pumpe wird zuerst mit einem Drucksprung von 25000 Pa gestartet. Der Wärmeerzeuger regelt die Vorlauftemperatur nach der Heizkurve. Aufgrund des nicht abgeglichen Systems verhält sich die Hydraulik nach der Matrix $M_1$:

$$M_1 = \begin{bmatrix} 0,2 & 0,2 & 0,6 & 283 & 160 & 80 & 16000 & 5143 & 3857 & 25000 \\ 0,2 & 0,2 & 0,6 & 283 & 160 & 80 & 16000 & 5143 & 3857 & 25000 \\ 0,2 & 0,6 & 0 & 283 & 122 & 0 & 16000 & 9000 & 0 & 25000 \end{bmatrix}$$

Der Volumenstrom durch den Heizkörper HK3 soll 30 l/h betragen, um den geforderten Temperatur-Sollwert zu erreichen. Der reale Volumenstrom beträgt aber 122 l/h, viel größer als erforderlich. Demzufolge erreicht die Raumtemperatur des Raumes mit dem HK3 als erstes den Temperatur-Sollwert. Danach verringert sich der Ventilhub von HK3 solange, bis es durch diesen Heizkörper HK3 ein Volumenstrom von 30 l/h ergibt. Analog erfolgt es bei den Heizkörpern HK1 und HK2. Nach dem Ende der Aufheizphase stellen sich die stationären Arbeitspunkte von 10 % für das Ventil 1; 23 % für das Ventil 2 und 5 % für das Ventil 3 ein.

| Heizkörper | Voreinstellung | Volumenstrom [l/h] | $K_V$-Wert [l/h] | Hub [%] |
|---|---|---|---|---|
| 1 | N | 50 | 138 | 10 |
| 2 | N | 100 | 310 | 23 |
| 3 | N | 30 | 70 | 5 |

Jeder Stellantrieb übermittelt den eigenen stationären Arbeitspunkt, Temperatur-Istwert und -Sollwert an die Zentrale Regeleinheit. Die Zentrale Regeleinheit prüft, ob alle Sollwerte eingehalten sind. In dem Beispiel ist diese Bedingung erfüllt. Die stationären Arbeitspunkte betragen 10, 23 und 5 %; sind viel kleiner als 100 %. Das ist ein Hinweis darauf, dass die Pumpenleistung zu hoch ist. Demzufolge wird die Pumpenleistung Schrittweise z.B. um 5 % reduziert. Bis einem Pumpendrucksprung von 17000 Pa ergeben sich die Ergebnisse in der folgenden Tabelle.

| Heizkörper | Voreinstellung | Volumenstrom [l/h] | $K_V$-Wert [l/h] | Hub [%] |
|---|---|---|---|---|
| 1 | N | 50 | 221 | 16 |
| 2 | N | 100 | 647 | 98 |
| 3 | N | 30 | 94 | 7 |

Da sich das Ventil am HK2 in Stellung nahezu 100 % befindet und alle Temperatur-Sollwerte eingehalten sind, wird die Pumpenleistung von 17000 Pa für richtig eingeschätzt.

Nach der Adaption der Pumpenleistung erfolgt die Anpassung der Heizkurve. Dabei fährt die Pumpe mit der konstanten Förderhöhe von 17000 Pa. Fällen in Raum mit dem Heizkörper HK2 innere und äußere Wärmegewinne an, sodass sich der Ventilhub am HK2 verringert. Sobald der Ventilhub am HK2 viel kleiner als 100 % beträgt, kann der Vorlauftemperatur-Sollwert von der Heizkurve abgesenkt werden. Die Vorlauftemperatur lässt sich solange reduzieren, bis es in der Heizungsanlage ein Ventil gibt, dessen Hub die Stellung nahezu 100 % annimmt.

In der Zentralen Regeleinheit werden die Pumpenleistung von 17000 Pa sowie die stationären Arbeitspunkte von 16, 98 und 7 % als obere Grenzwerte für die Anlagenkonstellation mit drei Ventilen in Zwischenstellung gespeichert. Zum Beginn der nächsten Aufheizphase (z.B. am nächsten Tag) startet die Pumpe mit einer Leistung von 17000 Pa. Gleichzeitig werden die Ventilhübe von den oberen Grenzwerten (16, 98 und 7 %) begrenzt. Somit werden alle Heizkörper bedarfsgerecht versorgt. Der ungünstigste Raum wird nicht mehr wie beim statischen hydraulischen Abgleich bevorzugt behandelt. Es besteht außerdem keine Verengung des Ventil-Querschnittes durch manuelle Voreinstellungen und somit auch keine Verstopfungsgefahr in den Thermostatventilen.

Befinden sich ein oder mehrere Ventile in geschlossener Stellung, ergibt sich eine neue Anlagenkonstellation. Deshalb fangen die Prozeduren zur Ermittlung der Pumpenleistung sowie der oberen Grenzwerte wie oben beschrieben wieder von vorn an.

Das o.g. Beispiel zeigt, dass es bei beliebigen Randbedingungen immer ein hydraulisch ungünstigstes Ventil im gesamten System gibt, das einen Hub von nahezu 100 % hat. Die übrigen Ventilhübe sind somit kleiner als 100 %.

Nach der Erfindung ist vorgesehen, dass die Motorantriebe und die Zentrale Regeleinheit sowie der Wärmeerzeuger kabelgebunden oder kabellos miteinander kommunizieren.

Der Motorantrieb stellt die erfasste Raumtemperatur, die Solltemperatur und den aktuellen Ventilhub (Rauminformation) der Zentralen Regeleinheit zur Verfügung. Das erfindungsgemäße Verfahren, das ebenfalls in der Zentralen Regeleinheit abgelegt ist, speichert die notwendigen Pumpenleistungen und die oberen Grenzwerte für jede Anlagenkonstellation. Weiterhin übernimmt die Zentrale Regeleinheit die Anpassung der Heizkurve anhand der Temperatur-Istwerte, -Sollwerte sowie der aktuellen Ventilstellungen.

Die Zentrale Regeleinheit stellt die gespeicherten Daten an den entsprechenden Geräten (Antriebe, Kessel, Pumpe) zur Verfügung. Falls der Wärmeerzeuger die Ansteuerung der Pumpe übernimmt, entfällt eine direkte Kommunikation zwischen der Zentralen Regeleinheit und der Pumpe. Besteht die Möglichkeit, das erfindungsgemäße Verfahren in das Regelungsgerät des Wärmeerzeugers zu integrieren, entfällt die Zentrale Regeleinheit. In diesem Fall kommuniziert der Wärmeerzeuger direkt mit den Heizkörper-Antrieben.

Die Förderhöhe bzw. die Pumpenleistung und die oberen Grenzwerte werden in Abhängigkeit der Anlagenkonstellation (Anzahl der versorgten Heizkörper) vorzugsweise als erstes ermittelt. Danach erfolgt die Adaption der Heizkurve.

Bezugszeichenliste:

| | |
|---|---|
| 1 | Thermostatventilunterteil |
| 2 | Thermostatkopf |
| 2a | Motorantriebe |
| 3 | Pumpe |
| A, B, C,D | Abzweigung für Teilstrecken des Rohrnetzes |
| HK1 | Heizkörper 1 |
| HK2 | Heizkörper 2 |
| HK3 | Heizkörper 3 |
| $b_a$, $b_b$, $b_1$, $b_2$, $b_3$ | Hydraulischer Widerstand |
| WE | Wärmeerzeuger |
| VL | Vorlauf |
| RL | Rücklauf |
| ZRE | Zentrale Regeleinheit |

**Patentansprüche**

1. Heizungsanlage mit einem zentralen Wärmeerzeuger (WE), einer zentralen Pumpe (3), einer Regeleinheit (ZRE), wenigstens zwei Heizkörpern (HK1, HK2, HK3), die jeweils ein über einen Stellmotor (2a) einstellbares Ventil (1) besitzen und die zu den Heizkörpern (HK1, HK2, HK3) korrespondierende Temperatur-Sensoren aufweist korrespondieren, wobei die Stellmotoren (2a) und zusätzlich der Wärmeerzeuger (WE) und/oder zusätzlich die Pumpe (3) kabellos oder kabelgebunden zum Datenaustausch mit der Regeleinheit (ZRE) verbunden sind, **dadurch gekennzeichnet, dass** die Regeleinheit (ZRE) dazu ausgebildet ist, einen dynamischen hydraulischen Abgleich durch die Hubbegrenzung und/oder eine Anpassung der Pumpenleistung und/oder eine Adaption der Vorlauftemperatur (VL) vom Wärmeerzeuger (WE) in Abhängigkeit von dem Hub des hydraulisch ungünstigsten Ventils durchzuführen, wobei es bei beliebigen Randbedingungen immer ein hydraulisch ungünstigstes Ventil im gesamten System gibt, das einen Hub von nahezu 100 % hat.

2. Heizungsanlage nach Anspruch 1, **dadurch gekennzeichnet, dass** die Regeleinheit (ZRE) dazu ausgebildet ist, anhand der Heizkurve sowie der von den Stellmotoren (2a) erfassten und an die Regeleinheit (ZRE) übertragenen Ventilhübe und der von den Temperatursensoren erfassten und an die Regeleinheit (ZRE) übertragenen Temperaturen und/oder Temperaturdifferenzen die Pumpenleistung unter Einhaltung der Solltemperaturen solange anzupassen, bis der Hub des hydraulisch ungünstigsten Ventils in der Heizungsanlage die festgelegte maximale Stellung annimmt.

3. Heizungsanlage nach Anspruch 2, **dadurch gekennzeichnet, dass** die Regeleinheit (ZRE) dazu ausgebildet ist, anhand der adaptierten Pumpenleistung, der unvoreingestellten Thermostatventile (1), sowie der von den Stellmotoren (2a) erfassten und an die Regeleinheit (ZRE) übertragenen Ventilhübe und den von den Temperatursensoren erfassten und an die Regeleinheit (ZRE) übertragenen Temperaturen und/oder Temperaturdifferenzen die Vorlauftemperatur (VL) solange anzupassen, bis der Hub des hydraulisch ungünstigsten Ventils in der Heizungsanlage die festgelegte maximale Stellung annimmt.

4. Heizungsanlage nach einem der Ansprüche 1 bis 3, **dadurch gekennzeichnet, dass** die Regeleinheit (ZRE) mit einem Datenspeicher verbunden ist und die Regeleinheit (ZRE) dazu ausgebildet ist, die stationären Arbeitspunkte der Ventile (1) in dem Datenspeicher abzulegen und/oder auszulesen.

5. Heizungsanlage nach einem der Ansprüche 1 bis Anspruch 4, **dadurch gekennzeichnet, dass** die Regeleinheit (ZRE) dazu ausgebildet ist, die Ventilhübe während eines Aufheizmodus entsprechend eines zuvor abgespeicherten stationären Arbeitspunktes als oberen Grenzwert zu begrenzen und während eines Regelmodus die Begrenzung aufzuheben.

6. Verfahren zum Betrieb einer Heizungsanlage nach Anspruch 1, wobei ein hydraulischer Abgleich durch die Hubbegrenzung und/oder eine Anpassung der Pumpenleistung und/oder eine Adaption der Vorlauftemperatur (VL) vom Wärmeerzeuger (WE) in Abhängigkeit von dem Hub des hydraulisch ungünstigsten Ventils durch die eine Regeleinheit (ZRE) vorgenommen werden, wobei es bei beliebigen Randbedingungen immer ein hydraulisch ungünstigstes Ventil im gesamten System gibt, das einen Hub von nahezu 100 % hat.

7. Verfahren zum Betrieb einer Heizungsanlage nach Anspruch 6, **dadurch gekennzeichnet, dass** der hydraulische Abgleich und die Pumpenleistung sowie die Regelung der Vorlauftemperatur vom Wärmeerzeuger (WE) fortlaufend in Abhängigkeit von dem Hub des hydraulisch ungünstigsten Ventils angepasst werden.

8. Verfahren zum Betrieb einer Heizungsanlage nach Anspruch 6, **dadurch gekennzeichnet, dass** während einer Aufheizphase die Ventilhübe entsprechend der bei einem hydraulisch abgeglichenen Zustand abgespeicherten Arbeitspunkten nach oben begrenzt sind und während der Regelungsphase die Begrenzung aufgehoben wird.

9. Verfahren zum Betrieb einer Heizungsanlage nach einem der Ansprüche 6 bis 8, **dadurch gekennzeichnet, dass** die Pumpenleistung unter Berücksichtigung der Heizkurve und der Einhaltung von Temperatur-Sollwerten solange angepasst wird, bis der Hub des hydraulisch ungünstigsten Ventils in der Heizungsanlage die festgelegte maximale Stellung annimmt.

10. Verfahren zum Betrieb einer Heizungsanlage nach einem der Ansprüche 6 bis 9, **dadurch gekennzeichnet, dass** die Vorlauftemperatur (VL) unter Berücksichtigung der adaptierten Pumpenleistung und der Einhaltung von Temperatur-Sollwerten bei unvoreingestellten Thermostatventilen (1) solange angepasst wird, bis es in der Heizungsanlage ein hydraulisch ungünstigstes Ventil (1) gibt, dessen Hub die festgelegte maximale Stellung annimmt.

11. Verfahren zum Betrieb einer Heizungsanlage nach einem der Ansprüche 6 bis 10, **dadurch gekennzeichnet, dass** die Pumpenleistung sowie die oberen Grenzwerte der Ventilhübe erneut ermittelt werden, wenn ein oder mehrere Ventile (1) geschlossene bzw. nahezu geschlossen sind.

12. Verfahren zum Betrieb einer Heizungsanlage nach einem der Ansprüche 6 bis 11, **dadurch gekennzeichnet, dass** die festgelegte maximale Stellung zwischen 90 und 100% eines vollständig geöffneten Ventils liegt.

13. Verfahren zum Betrieb einer Heizungsanlage nach einem der Ansprüche 6 bis 12, **dadurch gekennzeichnet, dass** ein hydraulischer Abgleich und/oder eine Anpassung der Pumpenleistung und/oder eine Adaption der Vorlauftemperatur vom Wärmeerzeuger (WE) durch eine in den Wärmeerzeuger (WE) oder in die Pumpe (3) integrierte Regeleinheit nach Anspruch 1 vorgenommen wird.

14. Verfahren zum Betrieb einer Heizungsanlage nach einem der Ansprüche 6 bis 13, **dadurch gekennzeichnet, dass** das Verfahren für Fußbodenheizung, Zweirohrheizungen, Einrohrheizung, Flächenheizung, Flächenkühlung, Kälte- und Kühlanlagen anwendbar ist.

**Claims**

1. A heating installation with a central heat generator (WE), a central pump (3), a control unit (ZRE), at least two radiators (HK1, HK2, HK3), which in each case possess a valve (1) that can be adjusted by way of a servomotor (2a), and which have temperature sensors corresponding to the radiators (HK1, HK2, HK3), wherein the servomotors (2a), and in addition the heat generator (WE), and/or in addition the pump (3), are connected to the control unit (ZRE) wirelessly or in a wired manner for purposes of data exchange, **characterised in that**, the control unit (ZRE) is designed so as to execute a dynamic hydraulic balancing operation by the lift limitation, and/or an adjustment of the pump output, and/or an adaptation of the flow temperature (VL) from the heat generator (WE), as a function of the lift of the hydraulically least favourable valve, wherein under any boundary conditions, there is always a hydraulically least favourable valve in the overall installation, which has a lift of almost 100%.

**2.** The heating installation in accordance with claim 1, **characterised in that**, the control unit (ZRE) is designed so as to adjust the pump output on the basis of the heating curve, together with the valve lifts detected by the servomotors (2a) and transmitted to the control unit (ZRE), and the temperatures and/or temperature differences detected by the temperature sensors and transmitted to the control unit (ZRE), whilst maintaining the set point temperatures until the lift of the hydraulically least favourable valve in the heating system assumes the defined maximum position.

**3.** The heating installation in accordance with claim 2, **characterised in that**, the control unit (ZRE) is designed so as to adjust the flow temperature (VL) on the basis of the adapted pump output, the non-preset thermostatic valves (1), together with the valve lifts detected by the servomotors (2a) and transmitted to the control unit (ZRE), and the temperatures and/or temperature differences detected by the temperature sensors and transmitted to the control unit (ZRE), until the lift of the hydraulically least favourable valve in the heating installation assumes the defined maximum position.

**4.** The heating installation in accordance with one of the claims 1 to 3, **characterised in that**, the control unit (ZRE) is connected to a data store, and the control unit (ZRE) is designed so as to store and/or read out the stationary operating points of the valves (1) in the data store.

**5.** The heating installation in accordance with one of the claims 1 to 4, **characterised in that**, the control unit (ZRE) is designed so as to limit the valve lifts during a heating mode corresponding to a previously stored stationary operating point as an upper limiting value, and to remove the limitation during a control mode.

**6.** A method for the operation of a heating installation in accordance with claim 1, wherein a hydraulic balancing operation is undertaken by the one control unit (ZRE), by means of the lift limitation, and/or an adjustment of the pump output, and/or an adaptation of the flow temperature (VL) from the heat generator (WE), as a function of the lift of the hydraulically least favourable valve, wherein under any boundary conditions, there is always a hydraulically least favourable valve in the overall installation, which has a lift of almost 100%.

**7.** A method for the operation of a heating installation in accordance with claim 6, **characterised in that**, the hydraulic balancing operation, and the pump output, together with the control of the flow temperature from the heat generator (WE), can be continuously adjusted as a function of the lift of the hydraulically least favourable valve.

**8.** A method for the operation of a heating installation in accordance with claim 6, **characterised in that**, during a heating phase, the valve lifts are limited in the upward direction in accordance with the operating points stored in a hydraulically balanced state, and the limitation is removed during the control phase.

**9.** A method for the operation of a heating installation in accordance with one of the claims 6 to 8, **characterised in that**, the pump output is adjusted, taking into account the heating curve and the maintenance of temperature set point values, until the lift of the hydraulically least favourable valve in the heating installation assumes the defined maximum position.

**10.** A method for the operation of a heating installation in accordance with one of the claims 6 to 9, **characterised in that**, the flow temperature (VL) is adjusted, taking into account the adapted pump output and the maintenance of temperature set point values with non-preset thermostatic valves (1), until there is a hydraulically least favourable valve (1) in the heating installation, the lift of which assumes the defined maximum position.

**11.** A method for the operation of a heating installation in accordance with one of the claims 6 to 10, **characterised in that**, the pump output, together with the upper limiting values of the valve lifts, are again determined, if one or a plurality of valves (1) are closed or almost closed.

**12.** A method for the operation of a heating installation in accordance with one of the claims 6 to 11, **characterised in that**, the defined maximum position lies between 90 and 100 % of a fully open valve.

**13.** A method for the operation of a heating installation in accordance with one of the claims 6 to 12, **characterised in that**, a hydraulic balancing operation, and/or an adjustment of the pump output, and/or an adaptation of the flow temperature from the heat generator (WE), is undertaken by a control unit in accordance with claim 1, integrated in the heat generator (WE) or in the pump (3).

**14.** A method for the operation of a heating installation in accordance with one of the claims 6 to 13, **characterised in**

**that**, the method can be used for underfloor heating, two-pipe heating, single-pipe heating, surface heating, surface cooling, refrigeration and cooling installations.

**Revendications**

1. Installation de chauffage avec un générateur central de chaleur (WE), une pompe centrale (3), une unité de réglage (ZRE), au moins deux radiateurs (HK1, HK2, HK3) qui possèdent chacun une soupape (1) réglable par un moteur de commande (2a) et qui présente des capteurs de température qui correspondent aux radiateurs (HK1, HK2, HK3), cependant que les moteurs de commande (2a) et en plus le générateur de chaleur (WE) et/ou en plus la pompe (3) sont reliés sans câble ou par câble à l'unité de réglage (ZRE) pour l'échange de données, **caractérisée en ce que** l'unité de réglage (ZRE) est configurée pour exécuter un équilibrage hydraulique dynamique par la limitation de course et/ou par une adaptation de la puissance de la pompe et/ou une adaptation de la température aller (VL) du générateur de chaleur (WE) en fonction de la course de la soupape la plus défavorable sur le plan hydraulique, cependant qu'il y a, dans des conditions marginales quelconques, toujours une soupape la plus défavorable sur le plan hydraulique qui a une course de près de 100%.

2. Installation de chauffage selon la revendication 1, **caractérisée en ce que** l'unité de réglage (ZRE) est configurée pour adapter, à l'aide de la courbe de chauffage ainsi que des courses de soupape détectées par les moteurs de commande (2a) et transmises à l'unité de réglage (ZRE) et des températures et/ou des différences de température détectées par les capteurs de température et transmises à l'unité de réglage (ZRE), la puissance de la pompe en respectant les températures de consigne jusqu'à ce que la course de la soupape la plus défavorable sur le plan hydraulique prenne dans l'installation de chauffage la position maximale fixée.

3. Installation de chauffage selon la revendication 2, **caractérisée en ce que** l'unité de réglage (ZRE) est configurée pour adapter, à l'aide de la puissance de la pompe adaptée, des soupapes thermostatiques préréglées (1) ainsi que des températures et/ou des différences de température détectées par les capteurs de température et transmises à l'unité de réglage (ZRE), la température aller (VL) jusqu'à ce que la course de la soupape la plus défavorable sur le plan hydraulique prenne dans l'installation de chauffage la position maximale fixée.

4. Installation de chauffage selon l'une des revendications 1 à 3, **caractérisée en ce que** l'unité de réglage (ZRE) est reliée à une mémoire de données et que l'unité de réglage (ZRE) est configurée pour déposer et/ou extraire les points de fonctionnement stationnaires des soupapes (1) dans la mémoire de données.

5. Installation de chauffage selon l'une des revendications 1 à 4, **caractérisée en ce que** l'unité de réglage (ZRE) est configurée pour limiter les courses de soupape pendant un mode chauffage selon un point de fonctionnement stationnaire mémorisé au préalable comme seuil supérieur et pour supprimer la limitation pendant un mode réglage.

6. Procédé pour faire fonctionner une installation de chauffage selon la revendication 1, cependant qu'un équilibrage hydraulique est effectué par la limitation de course et/ou par une adaptation de la puissance de la pompe et/ou une adaptation de la température aller (VL) du générateur de chaleur (WE) en fonction de la course de la soupape la plus défavorable sur le plan hydraulique par l'unité de réglage (ZRE), cependant qu'il y a, dans des conditions marginales quelconques, toujours une soupape la plus défavorable sur le plan hydraulique qui a une course de près de 100%.

7. Procédé pour faire fonctionner une installation de chauffage selon la revendication 6, **caractérisé en ce que** l'équilibrage hydraulique et la puissance de la pompe ainsi que le réglage de la température aller sont adaptés en continu en fonction de la course de la soupape la plus défavorable sur le plan hydraulique.

8. Procédé pour faire fonctionner une installation de chauffage selon la revendication 6, **caractérisé en ce que** les courses de soupape sont limitées vers le haut pendant une phase d'échauffement selon les points de fonctionnement mémorisées pour un état équilibré sur le plan hydraulique et que la limitation est supprimée pendant la phase de réglage.

9. Procédé pour faire fonctionner une installation de chauffage selon l'une des revendications 6 à 8, **caractérisé en ce que** la puissance de la pompe est adaptée en tenant compte de la courbe de chauffage et du respect des valeurs de consigne de la température jusqu'à ce que la course de la soupape la plus défavorable sur le plan hydraulique prenne dans l'installation de chauffage la position maximale fixée.

**10.** Procédé pour faire fonctionner une installation de chauffage selon l'une des revendications 6 à 9, **caractérisé en ce que** la température aller (VL) est adaptée en tenant compte de la puissance de la pompe adaptée et du respect des valeurs de consigne de la température, pour des soupapes thermostatiques préréglées (1), jusqu'à ce qu'il y ait dans l'installation de chauffage une soupape la plus défavorable sur le plan hydraulique dont la course prend la position maximale fixée.

**11.** Procédé pour faire fonctionner une installation de chauffage selon l'une des revendications 6 à 10, **caractérisé en ce que** la puissance de la pompe ainsi que les seuils supérieurs des courses de soupape sont à nouveau déterminés lorsqu'une ou plusieurs soupapes (1) sont fermées ou presque fermées.

**12.** Procédé pour faire fonctionner une installation de chauffage selon l'une des revendications 6 à 11, **caractérisé en ce que** la position maximale fixée se situe entre 90 et 100% d'une soupape entièrement ouverte.

**13.** Procédé pour faire fonctionner une installation de chauffage selon l'une des revendications 6 à 12, **caractérisé en ce qu'**un équilibrage hydraulique et/ou une adaptation de la puissance de la pompe et/ou une adaptation de la température aller est effectuée par le générateur de chaleur (WE) par une unité de réglage intégrée dans le générateur de chaleur (WE) ou dans la pompe (3) selon la revendication 1.

**14.** Procédé pour faire fonctionner une installation de chauffage selon l'une des revendications 6 à 13, **caractérisé en ce que** le procédé peut être utilisé pour le chauffage par le sol, les chauffages de type bitube, le chauffage monotube, le chauffage de surface, le refroidissement de surface, les installations de réfrigération et de refroidissement.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009004319 A1
- DE 102010056373 A1
- DE 4019503 A1